# EUROPÄISCHE PATENTSCHRIFT

(11) **EP 3 044 643 B1**
(45) Veröffentlichungstag und Bekanntmachung des Hinweises auf die Patenterteilung: **01.01.2020**
(21) Anmeldenummer: 14738727.8
(22) Anmeldetag: 24.06.2014
(51) Int. Cl.: G05B 19/418

(54) **NAVIGATIONSSYSTEM FÜR REINRÄUME**
NAVIGATION SYSTEM FOR CLEAN ROOMS
SYSTÈME DE NAVIGATION POUR SALLES BLANCHES

(30) Priorität: 11.09.2013 DE 102013015164
(43) Veröffentlichungstag der Anmeldung: 20.07.2016
(73) Patentinhaber: Sartorius Stedim Biotech GmbH, 37079 Göttingen (DE)
(72) Erfinder: SCHLACK, Stefan, 37083 Göttingen (DE); BÖTTCHER, Lars, 34212 Melsungen (DE); BECKER, Mario, Brooklyn, NY 11222 (US)
(74) Vertreter: Müller-Boré & Partner Patentanwälte PartG mbB
(86) Internationale Anmeldenummer: PCT/EP2014/001706
(87) Internationale Veröffentlichungsnummer: WO 2015/036067

(56) Entgegenhaltungen:
- EP-A1- 2 290 592
- Anonymous: "Pharmaceutical Manufacturing Facility Desing", , 8. April 2006 (2006-04-08), Seiten 1-2, XP055144002, Gefunden im Internet: URL:http://www.promodel.com/pdf/Project%20 Review%20-%20Pharma%20Mfg%20Facility%20Des ign.pdf [gefunden am 2014-10-02]
- Anonymous: "pharmaceutical facitliy design promodel - Google-Suche", , 2. Oktober 2014 (2014-10-02), XP55144000, Gefunden im Internet: URL:https://www.google.com/search?q=pharma ceutical+facitliy+design+promodel&hl=de&bi w=1736&bih=1211&source=lnt&tbs=cdr%3A1%2Cc d_min%3A%2Ccd_max%3A1.9.2013&tbm= [gefunden am 2014-10-02]
- GUIRARDELLO R ET AL: "Optimization of process plant layout with pipe routing", COMPUTERS & CHEMICAL ENGINEERING, PERGAMON PRESS, OXFORD, GB, Bd. 30, Nr. 1, 15. November 2005 (2005-11-15), Seiten 99-114, XP027759815, ISSN: 0098-1354 [gefunden am 2005-11-15]
- A. BURDORF ET AL: "CAPD-computer-aided plant design", COMPUTERS & CHEMICAL ENGINEERING, Bd. 28, Nr. 1-2, 1. Januar 2004 (2004-01-01), Seiten 73-81, XP055143988, ISSN: 0098-1354, DOI: 10.1016/S0098-1354(03)00180-7
- Oliver Ritthoff ET AL: "Merkmalsbasiertes Lernen von Platzierungsregeln im Rahmen der Aufstellungsplanung von Chemieanlagen Merkmalsbasiertes Lernen von Platzierungsregeln im Rahmen der Aufstellungsplanung von Chemieanlagen", , 1. September 2004 (2004-09-01), XP055111896, Gefunden im Internet: URL:http://sfbci.uni-dortmund.de/Publicati ons/Reference/Downloads/17904.pdf [gefunden am 2014-04-03]
- HAMAMOTO S ET AL: "Development and validation of genetic algorithm-based facility layout a case study in the pharmaceutical industry", INTERNATIONAL JOURNAL OF PRODUCTION RESEARCH, TAYLOR AND FRANCIS, GB, Bd. 37, Nr. 4, 1. Januar 1999 (1999-01-01) , Seiten 749-768, XP009180524, ISSN: 0020-7543
- DRIRA ET AL: "Facility layout problems: A survey", ANNUAL REVIEWS IN CONTROL, PERGAMON, AMSTERDAM, NL, Bd. 31, Nr. 2, 5. November 2007 (2007-11-05), Seiten 255-267, XP022364929, ISSN: 1367-5788

## Beschreibung

Die vorliegende Erfindung betrifft ein Verfahren zur Gestaltung eines Reinraums für die Herstellung von pharmazeutischen Produkten, ein Verfahren zur Herstellung von pharmazeutischen Produkten mit einem Navigationssystem, ein Computerprogrammprodukt zur Durchführung der Verfahren sowie einen Reinraum.

Die Anonymous: "Pharmaceutical Manufacturing Facility Design", 8. April 2006 (2006-04-08), Seiten 1-2, XP055144002, Gefunden im Internet: URL:http://www.promodel.com/pdf/Project%20Review%20-%20Pharma%20Mfg%20Facility%20Design.pdf [gefunden am 2014-10-02] offenbart Simulationsmodelle zur Visualisierung und Analyse der Leistungsfähigkeit von Reinräumen.

Die Anonymous: "pharmaceutical facitliy design promodel - GoogleSuche", 2. Oktober 2014 (2014-10-02), XP55144000, Gefunden im Internet: URL:https://www.google.com/search?q=pharmaceutical+facitliy +design+promodel&hl=de&biw=1736&bih=1211&source=Int&tbs=cdr%3A1%2Ccd_ min%3A%2Ccd_max%3A1.9.2013&tbm= [gefunden am 2014-10-02] stellt eine Trefferliste einer Google-Suche dar.

Die EP 2 290 592 A1 betrifft ein Verfahren zur computergestützten Planung eines technischen Systems zum Herstellen eines Produktes und ein entsprechendes Computerprogrammprodukt.

Die GUIRARDELLO R ET AL: "Optimization of process plant layout with pipe routing", COMPUTERS & CHEMICAL ENGINEERING, PERGAMON PRESS, OXFORD, GB, Bd. 30, Nr. 1, 15. November 2005 (2005-11-15), Seiten 99-114, XP027759815, ISSN: 0098-1354 [gefunden am 2005-11-15] betrifft den Entwurf von Vorrichtungen und Leitungen chemischer Fertigungsanlagen.

Die A. BURDORF ET AL: "CAPD-computer-aided plant design", COMPUTERS & CHEMICAL ENGINEERING, Bd. 28, Nr. 1-2, 1. Januar 2004 (2004-01-01), Seiten 73-81, XP055143988, ISSN: 0098-1354, DOI: 10.1016/50098-1354(03)00180-7 offenbart ein computerunterstütztes Entwerfen von Räumen für die chemische Fertigung.

Die Oliver Ritthoff ET AL: "Merkmalsbasiertes Lernen von Platzierungsregeln im Rahmen der Aufstellungsplanung von Chemieanlagen", 1. September 2004 (2004-09-01), XP055111896, Gefunden im Internet: URL:http://sfbci.uni-dortmund.de/Publications/Reference/Downloads/17904.pdf [gefunden am 2014-04-03] offenbart ein Werkzeug, das möglichst kostengünstige Platzierungsvorschläge für die Aufstellungsplanung von Chemieanlagen generiert.

Die HAMAMOTO S ET AL: "Development and validation of genetic algorithm-based facility layout a case study in the pharmaceutical industry", INTERNATIONAL JOURNAL OF PRODUCTION RESEARCH, TAYLOR AND FRANCIS, GB, Bd. 37, Nr. 4, 1. Januar 1999 (1999-01-01), Seiten 749-768, XP009180524, ISSN: 0020-7543 offenbart einen Algorithmus zur Planung pharmazeutischer Fertigungsräume.

Die DRIRA ET AL: "Facility layout problems: A survey", ANNUAL REVIEWS IN CONTROL, PERGAMON, AMSTERDAM, NL, Bd. 31, Nr. 2, 5. November 2007 (2007-11-05), Seiten 255-267, XP022364929, ISSN: 1367-5788 beschäftigt sich mit Problemen beim Entwerfen von Fertigungsräumen.

Im Allgemeinen werden Produktionsstätten für die Herstellung von Pharmazeutika bzw. Biopharmazeutika speziell für die Herstellung weniger bestimmter Produkte ausgelegt, wobei die Produktionsstätte typischerweise gut überwachte, klassifizierte Reinräume umfasst, in denen säurebeständige Stahl-verkleidete Vorrichtungen fest installiert sind. Die einzelnen Herstellungsschritte, die zur Herstellung eines (Bio-)Pharmazeutikums erforderlich sind, sind zudem meist auf verschiedene voneinander separierte Reinräume verteilt.

Der Nachteil dieser Produktionsstätten ist insbesondere, dass diese nur sehr unflexibel auf die Herstellung neuer/anderer Produkte, wie Medikamente bzw. Biopharmaka, umgestellt werden können, so dass ein hoher Aufwand betrieben werden muss, um ein neues/anderes Produkt herzustellen. Mit diesem Umstand geht einher, dass die Umstellung von einem Produkt auf ein anderes Produkt einen langen Planungsvorlauf benötigt. Weiterhin ist nachteilig, dass falls ein bestimmtes Produkt nur kurzzeitig hergestellt wird, dennoch ein hoher Aufwand betrieben werden muss, um die Produktionsstätte entsprechend anzupassen. Dies trifft insbesondere zu, wenn ein Produkt kurzzeitig und dringend benötigt wird, danach aber wieder das vorherige Produkt hergestellt werden soll.

Eine Abkehr von herkömmlichen Produktionsstätten ist jedoch nicht ohne weiteres möglich, da die Qualitäts- und Sicherheitsstandards beibehalten werden sollen. Dies betrifft insbesondere Aspekte wie die Verwendung der richtigen Vorrichtungen und Materialien, so dass ein Produkt mit der richtigen Zusammensetzung hergestellt wird.

In anderen Worten besteht ein Zielkonflikt zwischen der Senkung des Aufwands für die Bereitstellung der Produktionsstätten und für die Risikosenkung von Produktfehlem.

Weiterhin erfordert eine flexiblere Umgestaltung der Produktionsstätten sehr gut ausgebildetes und zuverlässiges Personal, so dass Fehler durch menschliches Versagen auf ein Minimum reduziert werden.

Die Fehlfunktion einer Produktionsstätte für (Bio-)Pharmazeutika kann gravierende Folgen haben. Denn die Fehlfunktion einer Produktionsstätte kann neben der Auswirkung von Verlusten von Marktanteilen oder Strafzahlungen auch zu Engpässen in der Versorgung oder Falschversorgung von Patienten durch fehlerhafte Medikamente führen.

Es ist daher ein Aspekt der vorliegenden Erfindung eine Möglichkeit bereitzustellen, mit der einerseits Kosten für die Bereitstellung von Produktionsstätten gesenkt werden können und zudem Produktionsstätten flexibel auf neue Produkte umgestellt werden können, wobei gleichzeitig das Risiko von Fehlfunktionen oder Fehlproduktionen auf ein Minimum reduziert wird.

Erfindungsgemäß wird diese Aufgabe durch die Gegenstände der unabhängigen Ansprüche gelöst. Bevorzugte Ausführungsformen der Erfindung sind Gegenstand der abhängigen Ansprüche.

Ein erster Aspekt der vorliegenden Erfindung betrifft ein Verfahren zur Gestaltung eines Reinraums für die Herstellung von pharmazeutischen Produkten umfassend die Schritte:
- Auswählen eines pharmazeutischen Produkts zur Herstellung in dem Reinraum;
- Bestimmen von einer oder mehreren spezifischen Vorrichtungen und/oder einem oder mehreren spezifischen Materialien zur Herstellung des ausgewählten pharmazeutischen Produkts; und
- Zuweisen von ein oder mehreren Positionen für die bestimmten jeweiligen spezifischen Vorrichtungen und/oder spezifischen Materialien in dem Reinraum, und zwar unter Verwendung eines Navigationssystems,
wobei das Navigationssystem einen Projektor umfasst und mit diesem zumindest eine Anzeige im Bodenbereich des Reinraums vornimmt, welche einer Position im Reinraum zugeordnet ist, an welcher jeweils die zur Herstellung des ausgewählten pharmazeutischen Produkts spezifische Vorrichtung und/oder das spezifische Material anzuordnen ist,
wobei die Anzeige einen Projektionsstrahl umfasst, so dass der Projektionsstrahl auf einen Quadranten oder eine bestimmte Position im Reinraum leuchtet und ein Benutzer in der Lage ist, die spezifische Vorrichtung (16) und/oder das spezifische Material auf der vom Projektionsstrahl beleuchteten Position anzuordnen.

Ein pharmazeutisches Produkt kann insbesondere ein Medikament sein. Erfindungsgemäß ist vorgesehen, dass ein Reinraum flexibel und vielseitig einsetzbar ist, so dass eine Mehrzahl verschiedener pharmazeutischer Produkte in dem Reinraum produziert werden können. Der Reinraum ist vorzugsweise derart gestaltet, dass er ausreichend Strom-, Wasser- und/oder Abflussanschlüsse für die Herstellung verschiedener pharmazeutischer Produkte aufweist. In anderen Worten kann mit dem erfindungsgemäßen Verfahren ein Reinraum kurzfristig umgestaltet werden, so dass die gesamte Herstellung von einem pharmazeutischen Produkt in dem Reinraum eingestellt wird und ein anderes pharmazeutisches Produkt zeitnah in demselben, umgestalteten Reinraum hergestellt werden kann. Hierzu wird z. B. von dem Navigationssystem bestimmt, mit welchen Vorrichtungen ein bestimmtes (anderes) pharmazeutisches Produkt hergestellt werden soll und aus welchen Materialien dieses Medikament besteht. Wurde bestimmt, mit welchen spezifischen Vorrichtungen und/oder spezifischen Materialien ein bestimmtes Medikament hergestellt wird, wird diesen spezifischen Vorrichtungen bzw. Materialien eine Position im Reinraum zugewiesen.

Insbesondere können die Schritte "Auswählen" und "Bestimmen" zumindest teilweise automatisiert erfolgen. Beispielsweise kann das Navigationssystem ein computergestütztes System sein, wobei ein Benutzer mittels einer Schnittstelle eine Eingabe vornehmen kann. Mittels dieser Eingabe erfolgt dann eine Auswahl eines pharmazeutischen Produkts zur Herstellung in dem Reinraum, z.B. aus einer vom Navigationssystem vorgegebenen Liste von auswählbaren pharmazeutischen Produkten.

Insbesondere kann das erfindungsgemäße Verfahren den Schritt "Bereitstellen einer Vielzahl von Herstellungsinstruktionen für die Herstellung von pharmazeutischen Produkten" umfassen. Vorzugsweise enthalten Herstellungsinstruktionen eine Vielzahl von Datensätzen zur Herstellung von pharmazeutischen Produkten, wobei ein oder mehrere herzustellende pharmazeutischen Produkte aus der Vielzahl von Herstellungsinstruktionen ausgewählt werden.

In dem Navigationssystem kann eine Vielzahl von Herstellungsinstruktionen, z.B. in Form von Datensätzen, verschiedener pharmazeutischer Produkte hinterlegt sein, wobei diese Datensätze z.B. die Zusammensetzung des jeweiligen pharmazeutischen Produkts, die für die Herstellungen erforderlichen/spezifischen Vorrichtungen und/oder erforderlichen/spezifischen Materialien sowie deren Anordnung bzw. Positionen im Reinraum beinhalten.

Vorzugsweise weist das Navigationssystem automatisiert basierend auf dem Schritt "Bestimmen" entsprechende Positionen zu.

Im Rahmen der Zuweisung nimmt das Navigationssystem eine Anzeige vor, die einen Benutzer informiert, an welcher Position im Reinraum eine Vorrichtung/ Material zu positionieren ist.

Die Position, die einer spezifischen Vorrichtung oder einem spezifischen Material in dem Reinraum zugewiesen wird, richtet sich nach verschiedenen Aspekten wie einer effizienten Platznutzung im Reinraum und/oder effizienten Anordnung der Vorrichtungen zueinander für einen optimierten Herstellungsablauf. Vorzugsweise enthalten die Herstellungsinstruktionen einen Datensatz zu dem ausgewählten pharmazeutischen Produkt, wobei der Datensatz für einen bestimmten Reinraum bzw. für den Reinraum Informationen über die Positionen, an denen die spezifischen Vorrichtungen und/oder spezifischen Materialien anzuordnen sind, enthält. Vorzugsweise können die Positionen in dem Reinraum für die spezifischen Vorrichtungen und/oder Materialien des ausgewählten pharmazeutischen Produkts von dem Navigationssystem abgefragt werden.

Eine Position im Reinraum kann beispielsweise definiert sein durch GPS-Koordinaten bzw. GPS-Koordinatenbereiche (GPS = Global Positioning System). Weiterhin kann eine Position im Reinraum durch ein oder mehrere Planquadrate definiert sein.

Das Navigationssystem zeigt einem Benutzer oder Monteur visuell an, wo eine spezifische Vorrichtung im Reinraum anzuordnen ist.

Erfindungsgemäß umfasst die visuelle Anzeige einen Projektionsstrahl, so dass der Projektionsstrahl auf einen Quadranten oder eine bestimmte Position im Reinraum leuchtet und ein Benutzer in der Lage ist, die bestimmte spezifische Vorrichtung/das bestimmte spezifische Material auf der vom Projektionsstrahl beleuchteten Position anzuordnen. Zusätzlich kann eine visuelle Anzeige eine virtuelle Darstellung des Reinraums sein, wobei in der virtuellen Darstellung die zugewiesene Position angezeigt wird. Beispielsweise kann diese virtuelle Darstellung mittels eines Tablet-Computers bzw. IPad angezeigt werden.

Das Navigationssystem erleichtert somit den Umbau des Reinraums, indem es ein effizientes und schnelles Umbauen ermöglicht.

Ein weiterer Aspekt der vorliegenden Erfindung betrifft ein Verfahren zur Herstellung von pharmazeutischen Produkten mit einem Navigationssystem umfassend die Schritte gemäß dem ersten Aspekt sowie die weiteren Schritten:
- Ermitteln einer Reihenfolge von Herstellungsschritten zur Verarbeitung von spezifischen Materialien;
- Ausgeben einer Anweisung, welche zumindest einen Teil von Herstellungsschritten zur Verarbeitung von spezifischen Materialien enthält; und
- Ausgeben einer Statusbenachrichtigung über die Herstellung des ausgewählten pharmazeutischen Produkts, wenn eine Systemanfrage gestellt wird.

Unter dem Begriff "Ermitteln" ist insbesondere eine Systemabfrage zu verstehen. Dies kann vorzugsweise derart geschehen, dass ein Benutzer eine Abfrage an das Navigationssystem stellt. Alternativ oder zusätzlich kann vorgesehen sein, dass das Navigationssystem automatisch eine Reihenfolge von Herstellungsschritten ermittelt, sobald der Reinraum für die Herstellung des pharmazeutischen Produkts vollständig eingerichtet ist. Ermitteln kann insbesondere ein Abfragen von Datenbankinhalten des Navigationssystems umfassen.

Wurde eine Reihenfolge ermittelt, wird eine Anweisung ausgegeben. Eine Anweisung kann beispielsweise eine Listung von Herstellungsschritten umfassen, die auf einem Monitor/Display des Navigationssystems angezeigt und/oder durch das Navigationssystem in Papierform bereitgestellt wird. Die ausgegebene Anweisung kann auch nur einen Teil der notwendigen Herstellungsschritte umfassen, die erforderlich sind, um das ausgewählte pharmazeutische Produkt herzustellen.

Insbesondere können mehrere Anweisungen nacheinander ausgegeben werden. Diese mehreren Anweisungen können schließlich die gesamten Herstellungsschritte ergeben. Auch können nacheinander folgende Anweisungen teilweise sich überlappende Herstellungsschritte enthalten. Dies ist beispielsweise der Fall, wenn die nachfolgende Anweisung zu einem Zeitpunkt ausgegeben wurde, zu dem die Herstellungsschritte gemäß der ersten Anweisung noch nicht abgeschlossen waren. In anderen Worten kann eine erste (vorhergehende) Anweisung die Herstellungsschritte von n bis n+5 enthalten und die zweite (nachfolgende) Anweisung die Herstellungsschritte n+4 bis n+9.

Der Schritt "Ausgeben einer Statusbenachrichtigung über die Herstellung des ausgewählten pharmazeutischen Produkts" kann beispielsweise eine Mitteilung umfassen, in der einem Benutzer mitgeteilt wird, zu wieviel Prozent die Herstellung einer bestimmten Charge abgeschlossen ist und/oder wie viele Herstellungsschritte noch durchzuführen sind. Eine solche Statusbenachrichtigung wird ausgegeben, wenn eine Systemanfrage gestellt wird. Eine Systemanfrage kann automatisiert gestellt werden. Beispielsweise kann eine Systemanfrage zu vorgegebenen Zeiten/Uhrzeiten gestellt werden. Zusätzlich oder alternativ kann eine Systemanfrage durch eine Benutzereingabe an einer Schnittstelle gestellt werden. Vorzugsweise wird die Statusbenachrichtigung über einen Monitor, graphische Benutzerschnittstelle (GUI = Graphic User Interface) und/oder in Papierform ausgegeben.

Vorzugsweise umfassen die Verfahren den Schritt "Ausgeben einer Benutzerinformation über das Vorhandensein oder Fehlen von spezifischen Vorrichtungen und/oder spezifischen Materialien".

Verschiedene Vorrichtungen und/oder verschiedene Materialien können beispielsweise in einem oder mehreren Lagern aufbewahrt werden. Wurde ein pharmazeutisches Produkt ausgewählt und die dazugehörigen spezifischen Vorrichtungen und/oder spezifischen Materialien bestimmt, können die spezifischen Vorrichtungen und/oder spezifischen Materialien, vorzugsweise nacheinander, in den Reinraum verbracht werden, um dort an der entsprechenden zugewiesenen Position angeordnet zu werden.

Ein Benutzer kann beispielsweise eine Systemanfrage stellen, ob der Reinraum bereits mit allen spezifischen Vorrichtungen/spezifischen Materialien bestückt wurde. Basierend auf der Systemanfrage kann eine Benutzerinformation ausgegeben werden, welche spezifischen Vorrichtungen und/oder spezifischen Materialien zum Zeitpunkt der Anfrage im Reinraum vorhanden sind bzw. fehlen. Diese Systemanfrage kann beispielsweise an das Navigationssystem gestellt werden.

Zusätzlich oder alternativ können in dem Navigationssystem Informationen hinterlegt sein, welche der spezifischen Vorrichtungen und/oder der spezifischen Materialien sofort verfügbar bzw. lagernd sind. Entsprechend kann nach einem Bestimmen der spezifischen Vorrichtungen und/oder der spezifischen Materialien eine Benutzerinformation über das Vorhandensein oder Fehlen von spezifischen Vorrichtungen und/oder spezifischen Materialien im Sinne einer Verfügbarkeit ausgegeben werden.

Vorzugsweise stellt das Navigationssystem Informationen bereit, in welchem/n Lagerraum/-räumen, welche spezifische Vorrichtung/welches spezifische Material lagert. Weiterhin vorzugsweise stellt das Navigationssystem Informationen bereit, ob eine spezifische Vorrichtung und/oder ein spezifisches Material zu einem bestimmten Zeitpunkt bzw. während eines bestimmten Zeitraumes verfügbar ist.

Vorzugsweise umfassen die Verfahren den Schritt "Ordern von fehlenden spezifischen Vorrichtungen und/oder fehlenden spezifischen Materialien".

Sind spezifische Vorrichtungen und/oder spezifische Materialien nicht zu einem bestimmten Zeitpunkt verfügbar, werden diese fehlenden spezifischen Vorrichtungen und/oder spezifischen Materialien geordert.

Vorzugsweise kann das Ordern automatisiert erfolgen. Wurden beispielsweise die spezifischen Vorrichtungen/spezifischen Materialien bestimmt und fehlen einige der spezifischen Vorrichtungen/spezifischen Materialien bzw. sind zu einem bestimmten Zeitpunkt nicht verfügbar, so kann das Navigationssystem die fehlenden bzw. nicht verfügbaren spezifischen Vorrichtungen/spezifischen Materialien automatisch ordern.

Alternativ oder zusätzlich kann automatisiert eine Benutzerinformation über eine Anzahl von verfügbaren alternativen spezifischen Vorrichtungen/spezifischen Materialien ausgegeben werden.

Alternativ erfolgt das Ordern erst nach einer Freigabe eines Benutzers.

Vorzugsweise kann vorgesehen sein, dass die Benutzerinformation über das Vorhandensein oder Fehlen von spezifischen Vorrichtungen und/oder spezifischen Materialien standardmäßig (default) ausgegeben wird, wenn zumindest eine spezifische Vorrichtung und/oder spezifisches Material nicht verfügbar bzw. nicht über einen bestimmten Zeitbereich verfügbar ist. In anderen Worten wird eine Benutzerinformation ausgegeben, wenn eine automatisierte Systemabfrage gestellt wird.

Alternativ kann vorgesehen sein, dass eine Benutzerinformation über das Vorhandensein oder Fehlen von spezifischen Vorrichtungen und/oder spezifischen Materialien nur ausgegeben wird, wenn eine Systemanfrage durch einen Benutzer gestellt wird.

Vorzugsweise weisen die spezifischen Vorrichtungen und/oder spezifischen Materialien Identifikatoren zur Identifikation und/oder Lokalisation der spezifischen Vorrichtungen und/oder spezifischen Materialien durch das Navigationssystem auf.

Beispielsweise können die Vorrichtungen und/oder Materialien mit Radiofrequenz-Identifikations (RFID) -Etiketten und/oder Barcodes und/oder Global-Positioning-System (GPS) -Sendern/Empfängern versehen sein.

Beispielsweise kann eine spezifische Vorrichtung/ein spezifisches Material mittels Identifikator erkannt/identifiziert werden, so dass mittels des Navigationssystems festgestellt werden kann, ob sich die spezifische Vorrichtung/das spezifische Material bereits im Reinraum befindet und/oder an der zugewiesenen Position befindet. Weiterhin vorzugsweise kann mittels der Identifikatoren festgestellt werden, in welchem Lagerraum oder anderem Reinraum sich die spezifische Vorrichtung/das spezifische Material befindet. In anderen Worten kann eine spezifische Vorrichtung/ ein spezifisches Material in einfacher Weise mittels eines Identifikators lokalisiert werden.

Vorzugsweise umfassen die Verfahren den weiteren Schritt:
- Bereitstellen von Markierungen in dem Bodenbereich des Reinraums, wobei die Markierungen ein Raster aus mehreren Feldern umfassen, wobei zumindest ein Teil der Felder zumindest einen Teil eines Platzhalters für eine zugewiesene spezifische Vorrichtung und/oder ein zugewiesenes spezifisches Material aufweist.

Insbesondere können die bereitgestellten Markierungen in dem Bodenbereich des Reinraums nur ein Teil bzw. eine Art von Markierungen sein. Beispielsweise können weitere Markierungen an Wand- und/oder Deckenbereichen angeordnet sein.

Beispielsweise kann eine Markierung ein farbliches oder sonstig visuell hervorgehobenes Rechteck, Kreuz, Linierung, Buchstaben und/oder Zahlen etc. sein.

Beispielsweise kann der Bodenbereich des Reinraums zumindest teilweise in Felder, wie z.B. Rechtecke, Quadrate, Hexaeder, Dreiecke etc., unterteilt sein, so dass die Felder ein Raster bilden. Einer spezifischen Vorrichtung/einem spezifischen Material kann als Position ein bestimmtes Feld oder Gruppe von Feldern zugewiesen werden.

Beispielsweise kann die Anzeige, die das Navigationssystem vornimmt, ein Projektionsstrahl sein, der auf ein oder mehrere Felder deutet/leuchtet, so dass ein Benutzer erkennen kann, an welchem/n Feld(ern) eine spezifische Vorrichtung/ein spezifisches Material positioniert werden soll.

Die zumindest eine Anzeige ist eine Lichtprojektion. Die Anzeige gibt die Position im Reinraum an, an welcher jeweils die zur Herstellung des ausgewählten pharmazeutischen Produkts spezifische Vorrichtung und/oder das spezifische Material anzuordnen ist.

Weiterhin vorzugsweise umfassen die Verfahren den Schritt "Zuweisen von Anschlüssen in dem Reinraum, an die die spezifischen Vorrichtungen und/oder spezifischen Materialien anzuschließen sind". Vorzugsweise wird das Zuweisen von Anschlüssen unter Verwendung des Navigationssystems durchgeführt, wobei das Navigationssystem zumindest eine Anzeige vornimmt, mit welchen spezifischen Anschlüssen die spezifischen Vorrichtungen und/oder die spezifischen Materialien im Reinraum zu verbinden sind.

Die spezifischen Vorrichtungen weisen Anschlüsse, wie z.B. Einlässe, Auslässe, Wasser-, Strom-, Abflussanschlüsse und/oder Konnektoren, auf. Die spezifischen Vorrichtungen können weiterhin einen oder mehrere Anschlüsse oder Konnektoren umfassen, an die zumindest eine weitere spezifische Vorrichtung anschließbar ist. Mit anderen Worten können mittels Anschlüssen zwei oder mehr spezifische Vorrichtungen miteinander verbunden werden. Weiterhin können an den spezifischen Vorrichtungen Anschlüsse oder Konnektoren vorgesehen sein, so dass ein oder mehrere spezifische Materialien an die spezifischen Vorrichtungen angeschlossen werden können.

Insbesondere ist unter der Begrifflichkeit "Zuweisen von Anschlüssen in dem Reinraum, an die die spezifischen Vorrichtungen und/oder spezifischen Materialien anzuschließen sind" auch der Fall zu verstehen, dass Vorrichtungen miteinander bzw. mit Materialien angeschlossen/verbunden werden.

Weiterhin sind vorzugsweise in dem Reinraum selbst Anschlüsse oder Konnektoren vorgesehen, an denen spezifische Vorrichtungen angeschlossen werden können.

Weiterhin vorzugsweise umfassen die Verfahren den Schritt "Ausgeben einer Statusbenachrichtigung, ob eine spezifische Vorrichtung und/oder ein spezifisches Material gemäß der Zuweisung an den spezifischen Anschlüssen angeschlossen ist, wenn eine Systemanfrage gestellt wird".

Vorzugsweise umfassen die Verfahren den Schritt "Zuweisen von Anschlüssen für die bestimmten jeweiligen spezifischen Vorrichtungen und/oder spezifischen Materialien in dem Reinraum".

Weiterhin bevorzugt umfassen die Verfahren den Schritt "Bereitstellen eines virtuellen Bildes eines Sollzustandes des Reinraums, wobei basierend auf einer Systemanfrage ein Vergleich des virtuellen Bildes mit einem Istzustand des Reinraums vorgenommen wird".

Insbesondere kann das virtuelle Bild eines Sollzustandes die Positionen anzeigen bzw. beinhalten, an welche die bestimmten spezifischen Vorrichtungen und/oder spezifischen Materialien anzuordnen sind. Vorzugsweise kann das virtuelle Bild des Sollzustandes des Reinraums im Vergleich mit dem Istzustand über die Anzeige des Navigationssystems angezeigt werden.

Ein weiterer Aspekt betrifft ein Computerprogrammprodukt, welches, wenn geladen in einem Computer, zur Durchführung eines der voranstehend beschriebenen Verfahren bzw. deren bevorzugten Ausgestaltungen ausgelegt ist.

Ein weiterer Aspekt betrifft einen Reinraum zur Herstellung von pharmazeutischen Produkten mit einem Navigationssystem,
in dem eine Mehrzahl unterschiedlicher pharmazeutischer Produkte produzierbar ist, wobei zur Herstellung eines aus den unterschiedlichen pharmazeutischen Produkten ausgewählten pharmazeutischen Produkts jeweils spezifische Vorrichtungen und/oder spezifische Materialien im Reinraum anordenbar sind,
wobei mit dem Navigationssystem mittels zumindest einer Anzeige vornehmbar ist, an welcher Position bzw. an welchen Positionen im Reinraum die zur Herstellung des ausgewählten pharmazeutischen Produkts benötigten spezifischen Vorrichtungen und/oder spezifischen Materialien anzuordnen sind.

Die Ausführungen, Beschreibungen und Definitionen bezüglich der voranstehend beschriebenen Verfahren treffen ebenfalls auf den erfindungsgemäßen Reinraum hinsichtlich seiner Ausgestaltung und seiner Verwendung zu.

Vorteilhafterweise kann mit den vorhergehend beschriebenen Verfahren sichergestellt werden, dass eine Herstellung eines pharmazeutischen Produkts sicher und zuverlässig abläuft, während gleichzeitig der Aufwand an hochqualifiziertem Personal nicht ansteigt.

Die Erfindung wird nachstehend anhand von Ausführungsbeispielen unter Bezugnahme auf die beigefügte Figur beispielhaft beschrieben. Insbesondere können einzelne Merkmale der vorangehend und/oder nachfolgend beschriebenen Aspekte und/oder Ausführungsformen losgelöst von dem jeweiligen Aspekt bzw. der jeweiligen Ausführungsform zu weiteren Ausführungsformen kombiniert werden.

Es zeigt:

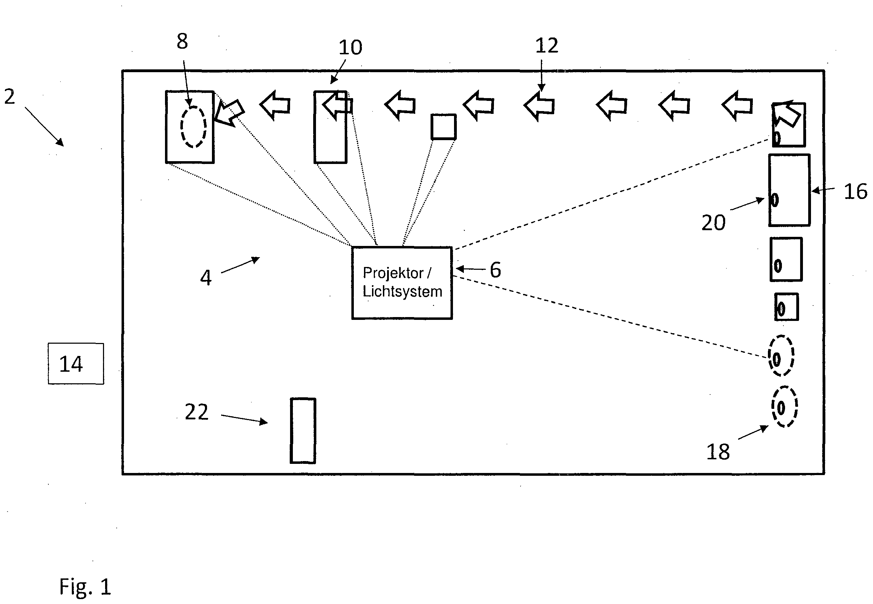

Figur 1 eine schematische Darstellung eines Reinraums mit Navigationssystem.

Figur 1 zeigt schematisch einen Reinraum 2 mit einem Navigationssystem 4, in dem spezifische Vorrichtungen 16 und Materialien 18 anzuordnen sind. Das Navigationssystem 4 umfasst einen Projektor 6, welcher eine Projektion 8 eines bestimmten spezifischen Materials 18 im Bodenbereich des Reinraums 2 projiziert, so dass ein Benutzer in einfacher Weise erkennen kann, an welcher Position im Reinraum 2 das bestimmte spezifische Material 18 anzuordnen ist. In anderen Worten entspricht die Projektion 8 des bestimmten spezifischen Materials der Position, die das bestimmte spezifische Material 18 im Reinraum 2 einnehmen soll.

Figur 1 zeigt weiterhin eine Projektion 10 einer bestimmten spezifischen Vorrichtung 16, so dass ein Benutzer in gleicher Weise erkennen kann, an welcher Position im Reinraum 2 die bestimmte spezifische Vorrichtung 16 anzuordnen ist.

Die Projektionen 8, 10 können beispielsweise schematisch die Umrisse der entsprechenden Vorrichtung 16 und/oder des entsprechenden Materials 18 auf den Bodenbereich des Reinraums 2 projizieren. Alternativ oder zusätzlich kann eine Projektion 8, 10 eine 3-dimensonale bzw. holographische Darstellung der entsprechenden Vorrichtung 16 und/oder des entsprechenden Materials 18 sein. Weiterhin kann eine Projektion 8, 10 punktförmig sein, so dass lediglich ein Lichtpunkt in dem Bodenbereich des Reinraums 2 erscheint. Weiterhin kann eine Projektion 8, 10 eine Nummer, Nummernfolge, ein Barcode und/oder ein Buchstabe bzw. Buchstabenfolge darstellen, so dass ein Benutzer basierend auf der Nummer etc. erkennen bzw. mit einem Barcode-Reader ermitteln kann, welche Vorrichtung 16/welches Material 18 an der Position anzuordnen ist, auf die die Nummer etc. projiziert wird. Dabei ist die Nummer bzw. der Buchstabe einer Vorrichtung 16 bzw. einem Material 18 zugeordnet.

Weiterhin können eine oder mehrere Projektionen 12 auf den Bodenbereich des Reinraums 2 vorgesehen sein, die einem Benutzer einen Weg zu einer oder mehreren Projektionen 8, 10 im Reinraum aufzeigen. Solche Projektionen 12 können zum Beispiel pfeilförmig sein.

Insbesondere kann eine Projektion beweglich sein, so dass ein Benutzer von einem Ausgangs- bzw. Startpunkt der beweglichen Projektion folgen kann, bis der Endpunkt, nämlich die zugewiesene Position, erreicht ist.

Das Navigationssystem 4 kann weiterhin ein oder mehrere Signale ausgeben, die anzeigen, ob eine Vorrichtung 16 bzw. ein Material 18 richtig positioniert wurde. Vorzugsweise ist das Navigationssystem 4 derart mit den bestimmten spezifischen Vorrichtungen 16 koppelbar, so dass eine bestimmte spezifische Vorrichtung 16 nur dann in Betrieb genommen werden kann, wenn die bestimmte spezifische Vorrichtung 16 an der zugewiesenen Position im Reinraum 2 angeordnet ist. Weiterhin kann vorgesehen sein, dass alternativ oder zusätzlich die bestimmte spezifische Vorrichtung 16 nur dann in Betrieb genommen werden kann, wenn die bestimmte spezifische Vorrichtung 16 an/mit den zugewiesenen Anschlüssen angeschlossen/verbunden ist.

Die spezifischen Vorrichtungen 16 und/oder spezifischen Materialien 18, die im Reinraum 2 anzuordnen sind, weisen vorzugsweise Identifikatoren 20 auf. Diese Identifikatoren 20 können derart gestaltet sein, dass das Navigationssystem 4 die Vorrichtungen 16/Materialien 18 basierend auf diesen Identifikatoren 20 identifizieren kann. Vorzugsweise kann das Navigationssystem 4 die Identifikation automatisch vornehmen. Beispielsweise können die Identifikatoren 20 RFID-Etiketten, Barcodes und/oder andere GPS-basierte Chips/Etiketten umfassen, die aktiv und/oder passiv sind. Ein aktiver Identifikator 20 würde aktiv seine Identifikation versenden, während ein passiver Identifikator 20 nur dann seine Identifikation versendet, wenn er z.B. durch ein äußeres Feld angeregt wird. Im Falle eines Barcodes als Identifikator 20 kann zum Beispiel das Navigationssystem 4 eine Ausleseeigenschaft aufweisen, die eine Identifikation ermöglicht.

Bezüglich der Materialien 18 kann mittels der Identifikatoren 20 weiterhin überwacht werden, wann das Verfallsdatum der Materialien 18 eintritt, so dass der Verbrauch im Herstellungsprozess bzw. in der Lagerhaltung berücksichtigt werden kann. Hierzu kann beispielsweise das Navigationssystem 4 eine Liste bereitstellen, die die Verfallsdaten in auf- oder absteigender Reihenfolge angibt, wenn eine Systemanfrage gestellt wird.

Weiterhin kann vorgesehen sein, dass das Navigationssystem 4 mittels eines Lichtstrahls auf eine bestimmte spezifische Vorrichtung 16 und/oder ein bestimmtes spezifisches Material 18 deutet. Vorzugsweise zeigt das Navigationssystem 4 in der Reihenfolge bzw. Sequenz auf eine Vorrichtung 16 und deren Position, wie es in einem Prozessplan vorgesehen ist.

Das Navigationssystem 4 umfasst weiterhin einen Monitor bzw. Display 14. Dieses Display 14 zeigt zum Beispiel an, welches pharmazeutische Produkt ausgewählt wurde, und somit im Reinraum 2 herzustellen ist. Der Monitor/Display 14 kann weiterhin eine Liste anzeigen, die alle benötigten/bestimmten spezifischen Vorrichtungen 16/Materialien 18 auflistet. Zudem kann der Monitor/Display 14 eine Beschreibung anzeigen, die angibt, wo im Reinraum 2 die spezifischen Vorrichtungen 16/Materialien 18 zu positionieren sind. Weiterhin kann der Monitor 14 eine Anweisung von Herstellungsschritten zur Verarbeitung von spezifischen Materialien 18 ausgeben.

Weiterhin kann auf dem Monitor bzw. Display 14 angezeigt werden, wo sich die bestimmten spezifischen Vorrichtungen 16/Materialien 18 auf dem Produktionsgelände bzw. in Lagern befinden, wenn sich diese Vorrichtungen 16/Materialien 18 noch nicht im Reinraum 2 befinden. Dies kann insbesondere mittels Identifikatoren geschehen.

Das Navigationssystem 4 umfasst weiterhin eine Benutzerschnittstelle 22, die es einem Benutzer ermöglicht, Systemanfragen zu stellen und/oder Benutzerinformationen abzurufen. Weiterhin kann ein Benutzer mittels der Benutzerschnittstelle 22 bestimmte Projektionen veranlassen, so dass zum Beispiel mittels einer Projektion angezeigt wird, wo in einem noch leeren oder nur teilweise bestückten Reinraum 2 alle bestimmten spezifischen Vorrichtungen 16 und/oder alle bestimmten spezifischen Materialien 18 angeordnet werden sollen. Weiterhin kann ein Benutzer auswählen, bestimmte Zwischenstadien/Sequenzen der Gestaltung des Reinraums 2 anzeigen zu lassen.

Umfasst der Reinraum 2 Markierungen in dem Bodenbereich des Reinraums 2, die ein Raster formen, kann eine Projektion darin bestehen, mittels einer punkt-, kreis- oder sonstigen Anzeige, einen bestimmten Rasterbereich (z.B. mit einem Laserpoint) zu beleuchten, damit ein Benutzer die zugewiesene Position für eine Vorrichtung 16/ein Material 18 erkennen kann.

Weiterhin kann das Navigationssystem 4 Anweisungen oder Informationen nicht nur auf dem Display/Monitor 14, sondern zusätzlich oder alternativ auf die Vorrichtungen 16/Materialien 18 selbst projizieren. Insbesondere kann ein Display/Monitor 14 ein Tablet-Computer oder IPad sein. Weiterhin können auch mehrere Displays/Monitore 14 vorgesehen sein, wobei diese unterschiedliche Informationen anzeigen können. Beispielsweise können mehrere Benutzer über eine jeweils separate Benutzerschnittstelle 22 verfügen und somit die Anzeige des jeweiligen Displays/Monitors 14 manipulieren/einstellen.

Vorzugsweise kann das Navigationssystem 4 eine "Augmented-reality"-Funktion umfassen, so dass ein Benutzer mit virtueller Unterstützung sehen kann, wie der Reinraum 2 zu gestalten ist. Weiterhin alternativ oder zusätzlich kann das Navigationssystem 4 eine "Google-Glasses"-Funktion umfassen.

Bezüglich der Installation der bestimmten spezifischen Vorrichtungen 16 und/oder der bestimmten spezifischen Materialien 18 können zum Beispiel auf dem Display/Monitor 14 schriftliche Anweisungen zur Installation, Videos und/oder Abbildungen angezeigt werden, die den Benutzer bei der Installation unterstützen.

Weiterhin kann die "Augmented-reality"-Funktion einen Vergleich zwischen einer vorgesehenen Handhabung/Vorgehensweise eines Benutzers ("best practise") und der tatsächlichen Handhabung/Vorgehensweise des Benutzers ermöglichen. Vorzugsweise nimmt hierbei eine oder mehrere Kameras die genaue Handhabung/Vorgehensweise des Benutzers auf. Wird eine Abweichung bei dem Vergleich festgestellt, die einen Grenzwert überschreitet, wird der Benutzer z.B. mittels eines Signals informiert.

Insbesondere ist unter dem Begriff "Augmented reality" (erweiterter Realität) eine computergestützte Erweiterung der Realitätswahrnehmung zu verstehen. Informationen basierend auf "Augmented reality" kann alle menschlichen Sinnesmodalitäten ansprechen. Insbesondere kann unter "Augmented reality" eine visuelle Darstellung von Informationen verstanden werden wie beispielsweise die Ergänzung von Bildern oder Videos mit computergenerierten Zusatzinformationen oder virtuellen Objekten mittels Einblendung/Überlagerung. In einer Darstellung bzw. einem Bild (z.B. real-time Darstellung) eines Reinraums könnten zum Beispiel spezifische Vorrichtungen und/oder spezifische Materialen eingeblendet werden, und zwar an den bzw. in Bezug auf die Positionen, an denen diese spezifischen Vorrichtungen und/oder spezifischen Materialen zu positionieren sind. In anderen Worten kann unter "Augmented-reality" ein direkter oder indirekter live (Echtzeit) "Blick" auf eine physische/körperliche, reale Umgebung verstanden werden, deren Elemente durch computer-generierte sensorische Beiträge/Eingaben wie Sound-, Video-, Grafik- oder GPS-Daten erweitert (oder ergänzt) werden. "Augmentation"/erweiterte Realität ist üblicherweise in Echtzeit und in semantischen Kontext mit Elementen der Umgebung, wie z. B. Sportergebnisse im Fernsehen während eines Spiels. Mit Hilfe einer erweiterten "Augmented-reality"-Technologie (z.B. Hinzufügen von Computer-Vision oder Objekterkennung) werden die Informationen über die Umgebung der realen Welt des Benutzers interaktiv und digital manipulierbar. Künstliche (artificial) Informationen über die Umgebung und ihre Objekte können mit der realen Welt überlagert werden.

Hinsichtlich eines Reinraums können mittels einer Augmented-reality-Funktion zusätzliche Informationen bereitgestellt werden und zwar bezüglich Anschlüssen bzw. Verbindungen bzw. Verschaltungen der Vorrichtungen/Geräte, Anordnung bzw. Anschluß von Leitungen und/oder Bereitstellen/Verbinden von Materialien/Rohstoffen/Verbrauchsmaterialen. Insbesondere kann dem Benutzer beispielsweise mittels einer Augmented-reality-Funktion angegeben werden, welche Verbindung einer spezifischen Vorrichtung mit welchem Anschluß einer anderen Verbindung vorgenommen werden soll. Hierzu kann eine Augmented-reality-Funktion auch bestimmte erforderliche Handgriffe bzw. die Handhabung vorgeben.

### Gemäß einem Szenario kann folgender Ablauf zur Gestaltung eines Reinraums 2 vorliegen:

Ein Benutzer betritt den leeren Reinraum 2. In einem Nebenraum zum Reinraum 2 oder Lagerraum befinden sich die für das Verfahren zur Herstellung des ausgewählten pharmazeutischen Produkts benötigten einzelnen spezifischen Vorrichtungen 16 (Bioreaktoren, Beutel, Container, Filtervorrichtungen, Sensoren, Schläuche etc.) oder die benötigten spezifischen Materialien 18 (z. B. Verbrauchsmaterialien oder Edukte für die Herstellung des pharmazeutischen Produkts).

Die bestimmten spezifischen Vorrichtungen 16 weisen RFID-Label auf (nicht erforderlich, wenn mit "Google-Glasses"-Funktion gearbeitet wird). Das Navigationssystem 4 (z. B. mit "Augmented-reality"-Funktion und/oder "Google-Glasses"-Funktionalität) informiert einen Benutzer darüber, ob alle (Verbrauchs-) Materialien (Edukte, Puffer, Zellkulturmedien) für die Herstellung vorhanden sind. Gegebenenfalls informiert das Navigationssystem den Benutzer über fehlende Materialien und bestellt diese automatisch bei Fehlen für eine spätere Herstellung.

Der Benutzer erhält vom Navigationssystem eine "Stückliste" mit einer Listung aller Komponenten (Einweg- und Mehrwegkomponenten), die für die Durchführung des Herstellungsverfahrens für ein ausgewähltes pharmazeutisches Produkt notwendig sind.

Der Boden des Reinraums 2 ist visuell und/oder haptisch in ein "Schachbrettmuster" eingeteilt. Die einzelnen Felder des Schachbrettmusters sind Platzhalter für die später im Reinraum zu positionierenden Vorrichtungen 16. Ein Raumraster des Reinraums mit Navigationssystem 4 umfasst vorzugsweise eine Positionsdetektion, z. B. durch Licht und/oder elektromagnetische Felder. Alternativ oder zusätzlich umfasst der Reinraumboden eine visuell wahrnehmbare Rasterung. Der Reinraumboden kann einen oder mehrere Quick-Response-Codes aufweisen. Ein Raumraster kann über Google-Glasses erkennbar sein. Alternativ oder zusätzlich können im Boden des Reinraums 2 Monitore (z.B. mit 3D-Barcode) eingelassen sein, die die spätere Positionierung der Vorrichtungen im Reinraum lenken. Das Navigationssystem 4, ggf. ergänzt durch "Augmented-reality"-Funktionalität, zeigt dem Benutzer durch Lichtprojektionen auf dem Boden des Reinraums an, an welchen Positionen des Raumrasters die einzelnen Vorrichtungen 16 positioniert werden müssen und wie die einzelnen Komponenten, z. B. über Schlauchleitungen oder Konnektoren, miteinander verbunden/angeschlossen werden müssen (lokale Verteilung der Komponenten im Reinraum 2). Die korrekte Verbindung/der korrekte Anschluss der Einzelkomponenten kann dem Benutzer durch optische, sensorische, sprachliche oder akustische Signale des Navigationssystems 4 angezeigt werden. Der Transport der Vorrichtungen 16 und anderen für den Prozess benötigten Komponenten (Vorrichtungen und/oder Materialien) aus dem Nebenraum und Positionierung der Komponenten im Reinraum 2 werden über eine "Google-Glasses"-Funktionalität oder andere "Augmented-Reality"-Funktionalität gesteuert. Die "Google-Glasses"-Funktionalität zeigt dem Benutzer ein virtuelles Bild aller betriebsbereit im Reinraum 2 installierten Komponenten an, die gemeinsam eine Herstellungsanlage für ein pharmazeutisches Produkt bilden. Der Benutzer kann dieses virtuelle Bild mit dem realem Bild im Reinraum 2 vergleichen und erhält von der "Google-Glasses"-Funktionalität Instruktionen, durch welche weiteren Komponenten (Vorrichtungen und/oder Materialien) das System zu vervollständigen ist. Die "Google-Glasses"-Funktionalität schickt den Benutzer in Nebenraum, um noch fehlende Komponenten zu holen und an die passende Stelle im Reinraum 2 zu stellen. Die "Google-Glasses"-Funktionalität erlaubt auch die Überprüfung, ob alle Komponenten an der jeweils richtigen Stelle angeordnet sind. Das Navigationssystem 4 zeigt dem Benutzer durch die "Augmented Reality"-Funktionalität an, welche Verbrauchsmaterialien (Pufferbeutel, Zellkulturmedienbeutel, Pulver) in welcher zeitlichen Abfolge im Prozess eingesetzt werden müssen. Das Navigationssystem 4 gibt bei einem Schichtwechsel (Neuer Benutzer führt den Prozess als Nachfolger für den vorherigen Benutzer weiter) ein Übernahmeprotokoll aus und gibt Information über den derzeitigen Status des Prozesses an den neuen Benutzer aus. Der neue Benutzer erhält eine verbale und/oder optische Statusinformation über den Herstellungsschritt, der vom vorherigen Benutzer bei Schichtwechsel gerade abgeschlossen worden ist (z.B. über "Google Glasses"-Funktionalität).

### Gemäß einem weiteren Szenario kann folgender Ablauf zur Gestaltung eines Reinraums 2 vorliegen:

Der Reinraum 2 enthält bereits die Einzelkomponenten bzw. Vorrichtungen 16 für den Herstellungsprozess eines ausgewählten pharmazeutischen Produkts, aber noch nicht in der für den Herstellungsprozess notwendigen lokalen Positionierung. Die "Google-Glasses"-Funktionalität oder andere "Augmented reality"-Funktionalität zeigt dem Benutzer über Lichtprojektionen, elektromagnetische Felder oder die vorgenannten Monitore mit 3D-Barcode an, an welche Positionen im Raumraster die einzelnen Komponenten verschoben werden müssen.

### Die zeitliche Abfolge der Prozessschritte bei beiden vorgenannten Szenerien wird nachstehend beschrieben:

Bei beiden Szenarien steuert/regelt das Navigationssystem 4 über eine Verbindung mit den einzelnen Komponenten im Reinraum 2 (z. B. Drahtloskommunikation, Bluetooth, etc.), in welcher zeitlichen Abfolge die Komponenten benutzt werden, um den Herstellungsprozess ablaufen zu lassen.

### Gemäß einem weiteren Szenario kann folgender Ablauf zur Gestaltung eines Reinraums 2 vorliegen:

In dem leeren Reinraum 2 werden zeitlich versetzt die Einzelkomponenten aus einem oder mehreren Nebenräumen über das Navigationssystem 4 in den Reinraum 2 befördert, bevor oder sobald das Herstellungsverfahren das Stadium erreicht hat, an welchem der Einsatz dieser Einzelkomponenten erforderlich wird. Nacheinander werden mit diesen Einzelkomponenten die einzelnen Herstellungsschritte über das Navigationssystem 4 gesteuert und/oder geregelt, bis zum Ende des Herstellungsprozesses alle Einzelkomponenten im Reinraum angeordnet sind.

### Abbau der Einzelkomponenten nach Abschluss des Verfahrens bei allen Szenarien:

Nach Abschluß des Herstellungsprozesses des ausgewählten pharmazeutischen Produkts gibt das Navigationssystem 4 dem Benutzer an, in welcher Weise die Einzelkomponenten (Vorrichtungen 16 und/oder Materialien 18) wieder im Reinraum 2 abmontiert und ggf. abtransportiert werden, um aus dem Reinraum in einen Nebenraum transferiert zu werden, damit diese dort für den nächsten Herstellungsprozess vorbereitet werden können (Kalibrierung, Validierung etc.)

### Bezugszeichenliste

- 2: Reinraum
- 4: Navigationssystem
- 6: Projektor
- 8: Projektion zu einem spezifischen Material
- 10: Projektion zu einer spezifischen Vorrichtung
- 12: Projektion als Markierung im Bodenbereich
- 14: Display
- 16: spezifische Vorrichtungen
- 18: spezifische Materialien
- 20: Identifikatoren
- 22: Benutzerschnittstelle

## Patentansprüche

1. Verfahren zur Gestaltung eines Reinraums (2) für die Herstellung von pharmazeutischen Produkten umfassend die Schritte:
- Auswählen eines pharmazeutischen Produkts zur Herstellung in dem Reinraum (2);
- Bestimmen von einer oder mehreren spezifischen Vorrichtungen (16) und/oder einem oder mehreren spezifischen Materialien (18) zur Herstellung des ausgewählten pharmazeutischen Produkts; und
- Zuweisen von ein oder mehreren Positionen für die bestimmten jeweiligen spezifischen Vorrichtungen (16) und/oder spezifischen Materialien (18) in dem Reinraum (2), und zwar unter Verwendung eines Navigationssystems (4),
**dadurch gekennzeichnet, dass** das Navigationssystem (4) einen Projektor (6) umfasst und mit diesem zumindest eine Anzeige (8, 10, 12, 14) im Bodenbereich des Reinraums (2) vornimmt, welche einer Position im Reinraum (2) zugeordnet ist, an welcher jeweils die zur Herstellung des ausgewählten pharmazeutischen Produkts spezifische Vorrichtung (16) und/oder das spezifische Material (18) anzuordnen ist, und
dass die Anzeige einen Projektionsstrahl umfasst, so dass der Projektionsstrahl auf einen Quadranten oder eine bestimmte Position im Reinraum leuchtet und ein Benutzer in der Lage ist, die spezifische Vorrichtung (16) und/oder das spezifische Material auf der vom Projektionsstrahl beleuchteten Position anzuordnen.

2. Verfahren zur Herstellung von pharmazeutischen Produkten mit einem Navigationssystem (4) umfassend die Schritte gemäß Anspruch 1 sowie die weiteren Schritte
- Ermitteln einer Reihenfolge von Herstellungsschritten zur Verarbeitung von spezifischen Materialien (18);
- Ausgeben einer Anweisung, welche zumindest einen Teil der ermittelten Reihenfolge von Herstellungsschritten zur Verarbeitung der spezifischen Materialien enthält (18); und
- Ausgeben einer Statusbenachrichtigung über die Herstellung des ausgewählten pharmazeutischen Produkts, wenn eine Systemanfrage (14, 22) gestellt wird.

3. Verfahren nach einem der Ansprüche 1 oder 2, umfassend die Schritte:
- Ausgeben einer Benutzerinformation über das Vorhandensein oder Fehlen von spezifischen Vorrichtungen (16) und/oder spezifischen Materialien (18); und
- Ordern von fehlenden spezifischen Vorrichtungen (16) und/oder fehlenden spezifischen Materialien (18).

4. Verfahren nach einem oder mehreren der Ansprüche 1 bis 3, wobei das Navigationssystem (4) die spezifischen Vorrichtungen (16) und/oder Materialien (18) basierend auf Identifikatoren (20) zur Identifikation und/oder Lokalisation der spezifischen Vorrichtungen (16) und/oder Materialien (18) durch das Navigationssystem (4) identifiziert, welche die spezifischen Vorrichtungen (16) und/oder Materialien (18) aufweisen.

5. Verfahren nach einem oder mehreren der Ansprüche 1 bis 4, umfassend den Schritt:
- Bereitstellen von Markierungen in dem Bodenbereich des Reinraums (2), wobei die Markierungen ein Raster aus mehreren Feldern umfassen, wobei zumindest ein Teil der Felder zumindest einen Teil eines Platzhalters für eine zugewiesene spezifische Vorrichtung (16) und/oder ein zugewiesenes spezifisches Material (18) aufweist.

6. Verfahren nach einem oder mehreren der Ansprüche 1 bis 5, umfassend die Schritte:
- Zuweisen von Anschlüssen in dem Reinraum (2), an die die spezifischen Vorrichtungen (16) und/oder die spezifischen Materialien (18) anzuschließen sind, und zwar unter Verwendung des Navigationssystems (4), wobei das Navigationssystem (4) zumindest eine Anzeige (8, 10, 12, 14) vornimmt, mit welchen spezifischen Anschlüssen die spezifischen Vorrichtungen (16) und/oder die spezifischen Materialien (18) im Reinraum (2) zu verbinden sind; und
- Ausgeben einer Statusbenachrichtigung, ob eine spezifische Vorrichtung (16) und/oder ein spezifisches Material (18) gemäß der Zuweisung an den spezifischen Anschlüssen angeschlossen ist, wenn eine Systemanfrage (14, 22) gestellt wird.

7. Verfahren nach einem oder mehreren der Ansprüche 1 bis 6, umfassend den Schritt:
- Bereitstellen eines virtuellen Bildes eines Sollzustandes des Reinraums (2), wobei basierend auf einer Systemanfrage (14, 22) ein Vergleich des virtuellen Bildes mit einem Istzustand des Reinraums (2) vorgenommen wird.

8. Verfahren nach einem oder mehreren der Ansprüche 1 bis 7, umfassend den Schritt:
- Bereitstellen einer Vielzahl von Herstellungsinstruktionen für die Herstellung von pharmazeutischen Produkten.

9. Verfahren nach einem oder mehreren der Ansprüche 1 bis 8, wobei das Navigationssystem (4) eine "Augmented-reality"-Funktion umfasst.

10. Verfahren nach Anspruch 9, wobei basierend auf der "Augmented-reality"-Funktion ein Vergleich zwischen einer vorgesehenen Handhabung eines Benutzers und der tatsächlichen Handhabung des Benutzers erfolgt.

11. Computerprogrammprodukt, welches, wenn geladen in einem Computer, zur Durchführung eines Verfahrens nach einem oder mehreren der Ansprüche 1 bis 10 ausgelegt ist.

12. Reinraum (2) zur Herstellung von pharmazeutischen Produkten mit einem Navigationssystem (4), das einen Projektor (6) umfasst,
in dem eine Mehrzahl unterschiedlicher pharmazeutischer Produkte produzierbar ist, wobei zur Herstellung eines aus den unterschiedlichen pharmazeutischen Produkten ausgewählten pharmazeutischen Produkts jeweils spezifische Vorrichtungen (16) und/oder spezifische Materialien (18) im Reinraum (2) anordenbar sind,
**dadurch gekennzeichnet, dass** mit dem Projektor (6) des Navigationssystems (4) zumindest eine Anzeige (8, 10, 12, 14) im Bodenbereich des Reinraums (2) vornehmbar ist, an welchen ein oder mehreren Positionen im Reinraum (2) die zur Herstellung des ausgewählten pharmazeutischen Produkts benötigten spezifischen Vorrichtungen (16) und/oder spezifischen Materialien (18) anzuordnen sind, und dass die Anzeige einen Projektionsstrahl umfasst, so dass der Projektionsstrahl auf einen Quadranten oder eine bestimmte Position im Reinraum leuchtet und ein Benutzer in der Lage ist, die spezifische Vorrichtung (16) und/oder das spezifische Material auf der vom Projektionsstrahl beleuchteten Position anzuordnen.

## Claims

1. A method for designing a clean room (2) for the manufacture of pharmaceutical products, comprising the steps of:
- selecting a pharmaceutical product for manufacture in the clean room (2);
- determining one or more specific devices (16) and/or one or more specific materials (18) for manufacturing the selected pharmaceutical product; and
- assigning one or more positions for the determined respective specific devices (16) and/or specific materials (18) in the clean room (2), namely using a navigation system (4),
**characterized in that**
the navigation system (4) comprises a projector (6) and uses said projector to provide at least one display (8, 10, 12, 14) in the floor area of the clean room (2), which display is allocated to a position in the clean room (2), at which the specific device (16) and/or the specific material (18) for manufacturing the selected pharmaceutical product is/are to be arranged in each case, and the display comprises a projection beam such that the projection beam shines onto a quadrant or a determined position in the clean room, and a user is able to arrange the specific device (16) and/or the specific material (18) on the position illuminated by the projection beam.

2. The method for manufacturing pharmaceutical products having a navigation system (4), comprising the steps according to Claim 1 as well as the further steps of:
- establishing a sequence of manufacturing steps for processing specific materials (18);
- issuing a command which contains at least a portion of the established sequence of manufacturing steps for processing the specific materials (18); and
- issuing a status notification about the manufacture of the selected pharmaceutical product when a system request (14, 22) is made.

3. The method according to any one of Claims 1 or 2, comprising the steps of:
- issuing user information about the presence or absence of specific devices (16) and/or specific materials (18); and
- ordering missing specific devices (16) and/or missing specific materials (18).

4. The method according to any one or more of Claims 1 to 3, wherein the navigation system (4) identifies the specific devices (16) and/or materials (18) based on identifiers (20) for identifying and/or locating the specific devices (16) and/or materials (18) using the navigation system (4), the specific devices (16) and/or materials (18) having said identifiers.

5. The method according to any one or more of Claims 1 to 4, comprising the step of:
- providing markers in the floor area of the clean room (2), wherein the markers comprise a grid made up of a plurality of fields, wherein at least one portion of the fields has at least one portion of a space holder for an assigned specific device (16) and/or an assigned specific material (18).

6. The method according to any one or more of Claims 1 to 5, comprising the steps of:
- assigning ports in the clean room (2), to which the specific devices (16) and/or the specific materials (18) are to be connected, namely using the navigation system (4), wherein the navigation system (4) provides at least one display (8, 10, 12, 14) indicating to which specific ports the specific devices (16) and/or the specific materials (18) are to be connected in the clean room (2); and
- issuing a status notification as to whether a specific device (16) and/or a specific material (18) is/are connected to the specific ports according to the assignment when a system request (14, 22) is made.

7. The method according to any one or more of Claims 1 to 6, comprising the step of:
- providing a virtual image of a nominal state of the clean room (2), wherein, based on a system request (14, 22), the virtual image is compared to an actual state of the clean room (2).

8. The method according to any one or more of Claims 1 to 7, comprising the step of:
- providing a plurality of manufacturing instructions for the manufacture of pharmaceutical products.

9. The method according to any one or more of Claims 1 to 8, wherein the navigation system (4) comprises an augmented reality function.

10. The method according to Claim 9, wherein, based on the augmented reality function, a comparison is made between an intended handling by a user and the actual handling by the user.

11. A computer program product which, when loaded onto a computer, is designed to carry out a method according to any one or more of Claims 1 to 10.

12. A clean room (2) for manufacturing pharmaceutical products having a navigation system (4), which comprises a projector (6),
in which a plurality of different pharmaceutical products can be produced, wherein, in order to manufacture a pharmaceutical product selected from the different pharmaceutical products, specific devices (16) and/or specific materials (18) can be arranged in the clean room (2) in each case,
**characterized in that**
at least one display (8, 10, 12, 14) can be provided with the projector (6) of the navigation system (4) in the floor area of the clean room (2), indicating at which one or more positions in the clean room (2) the specific devices (16) and/or specific materials (18) necessary for manufacturing the selected pharmaceutical product are to be arranged, and the display comprises a projection beam such that the projection beam shines onto a quadrant or a determined position in the clean room, and a user is able to arrange the specific device (16) and/or the specific material on the position illuminated by the projection beam.

## Revendications

1. Procédé de configuration d'une salle blanche (2) pour la fabrication de produits pharmaceutiques comprenant les étapes consistant à :
- sélectionner un produit pharmaceutique destiné à être fabriqué dans la salle blanche (2) ;
- déterminer un ou plusieurs dispositifs (16) spécifiques et/ou une ou plusieurs matières (18) spécifiques pour la fabrication du produit pharmaceutique sélectionné ; et
- attribuer une ou plusieurs positions dans la salle blanche (2) pour les dispositifs (16) spécifiques et/ou matières (18) spécifiques respectifs déterminés, et ce au moyen d'un système de navigation (4),
**caractérisé en ce que**
le système de navigation (4) comprend un projecteur (6) et effectue avec celui-ci au moins un affichage (8, 10, 12, 14) dans la zone du sol de la salle blanche (2), ledit affichage étant associé à une position dans la salle blanche (2), sur laquelle le dispositif (16) spécifique et/ou la matière (18) spécifique pour la fabrication du produit pharmaceutique sélectionné est à placer respectivement, et **en ce que** l'affichage comprend un faisceau de projection, de sorte que le faisceau de projection éclaire un quadrant ou une position définie dans la salle blanche et qu'un utilisateur est en mesure de disposer le dispositif (16) spécifique et/ou la matière spécifique sur la position éclairée par le faisceau de projection.

2. Procédé de fabrication de produits pharmaceutiques au moyen d'un système de navigation (4) comprenant les étapes selon la revendication 1 ainsi que les étapes supplémentaires consistant à
- déterminer une succession d'étapes de fabrication pour le traitement de matières (18) spécifiques ;
- émettre une consigne, qui contient au moins une partie de la succession d'étapes de fabrication déterminée pour le traitement des matières (18) spécifiques ; et
- émettre une notification d'état concernant la fabrication du produit pharmaceutique sélectionné quand une demande du système (14, 22) est émise.

3. Procédé selon l'une des revendications 1 ou 2, comprenant les étapes consistant à :
- émettre une information pour l'utilisateur concernant la présence ou l'absence de dispositifs (16) spécifiques et/ou matières (18) spécifiques ; et
- commander des dispositifs (16) spécifiques manquants et/ou des matières (18) spécifiques manquantes.

4. Procédé selon une ou plusieurs des revendications 1 à 3, dans lequel le système de navigation (4) identifie les dispositifs (16) et/ou les matières (18) spécifiques sur la base d'identificateurs (20), que présentent les dispositifs (16) et/ou matières (18) spécifiques, pour l'identification et/ou la localisation des dispositifs (16) et/ou matières (18) spécifiques par le système de navigation (4).

5. Procédé selon une ou plusieurs des revendications 1 à 4, comprenant l'étape consistant à :
- mettre à disposition des marquages dans la zone du sol de la salle blanche (2), les marquages comprenant un quadrillage constitué de plusieurs cases, une partie des cases comportant au moins une partie d'un substitut pour un dispositif (16) spécifique attribué et/ou une matière (18) spécifique attribuée.

6. Procédé selon une ou plusieurs des revendications 1 à 5, comprenant les étapes consistant à :
- attribuer des raccordements dans la salle blanche (2), auxquels les dispositifs (16) spécifiques et/ou les matières (18) spécifiques doivent être raccordés, et ce au moyen du système de navigation (4), le système de navigation (4) effectuant au moins un affichage (8, 10, 12, 14) indiquant à quels raccordements spécifiques les dispositifs (16) spécifiques et/ou les matières (18) spécifiques dans la salle blanche (2) sont à raccorder ; et
- émettre une notification d'état indiquant si un dispositif (16) spécifique et/ou une matière (18) spécifique est raccordé(e) aux raccordements spécifiques conformément à l'attribution, quand une demande du système (14, 22) est émise.

7. Procédé selon une ou plusieurs des revendications 1 à 6, comprenant l'étape consistant à :
- mettre à disposition une image virtuelle d'un état désiré de la salle blanche (2), une comparaison de l'image virtuelle avec un état réel de la salle blanche (2) étant effectuée sur la base d'une demande du système (14, 22).

8. Procédé selon une ou plusieurs des revendications 1 à 7, comprenant l'étape consistant à :
- mettre à disposition une pluralité d'instructions de fabrication pour la fabrication de produits pharmaceutiques.

9. Procédé selon une ou plusieurs des revendications 1 à 8, dans lequel le système de navigation (4) comprend une fonction de « réalité augmentée ».

10. Procédé selon la revendication 9, dans lequel, sur la base de la fonction de « réalité augmentée », une comparaison entre une manipulation prévue d'un utilisateur et la manipulation réelle de l'utilisateur est effectuée.

11. Produit de programme informatique qui, lorsqu'il est chargé sur un ordinateur, est conçu pour exécuter un procédé selon une ou plusieurs des revendications 1 à 10.

12. Salle blanche (2) destinée à la fabrication de produits pharmaceutiques, dotée d'un système de navigation (4) qui comprend un projecteur (6), dans laquelle une pluralité de produits pharmaceutiques différents peut être produite, des dispositifs (16) spécifiques et/ou des matières (18) spécifiques pouvant être respectivement disposés dans la salle blanche (2) pour la fabrication d'un produit pharmaceutique sélectionné parmi les différents produits pharmaceutiques,
**caractérisée en ce que**
au moins un affichage (8, 10, 12, 14) peut être effectué dans la zone du sol de la salle blanche (2) au moyen du projecteur (6) du système de navigation (4), indiquant sur quelles une ou plusieurs positions dans la salle blanche (2) les dispositifs (16) spécifiques et/ou matières (18) spécifiques nécessaires pour la fabrication du produit pharmaceutique sélectionné sont à disposer, et **en ce que** l'affichage comprend un faisceau de projection, de sorte que le faisceau de projection éclaire un quadrant ou une position définie dans la salle blanche et qu'un utilisateur est en mesure de disposer le dispositif (16) spécifique et/ou la matière spécifique sur la position éclairée par le faisceau de projection.
